# EUROPÄISCHE PATENTANMELDUNG

(11) **EP 2 056 566 A2**
(43) Veröffentlichungstag der Anmeldung: **06.05.2009**
(21) Anmeldenummer: 08105526.1
(22) Anmeldetag: 09.10.2008
(51) Int. Cl.: H04L 29/06, G06Q 30/00

(54) **Verfahren zur Durchführung einer Internet-Protokoll-basierten Kommunikation**

(30) Priorität: 26.10.2007 DE 102007051663
(71) Anmelder: Deutsche Telekom AG, 53113 Bonn (DE)
(72) Erfinder: Trinkel, Marian, 52372, Kreuzau OT Untermaubach (DE); Daußmann, Frank, 67454, Haßloch (DE)

(57) **Zusammenfassung**

Die Erfindung betrifft ein Verfahren und ein System zur Durchführung einer Internet-Protokoll-basierten Kommunikation, bei dem der Kennung eines Kommunikationsgerätes, die das Kommunikationsgerät ausserhalb des Internet aufweist, eine Internet-Netzkennung, insbesondere eine IP-Adresse automatisch zugeordnet wird und eine Kommunikation von Inhalten vom oder zum Nutzer des Kommunikationsgeräts virtuell von der zugeordneten oder an die zugeordnete Netzkennung erfolgt.

## Beschreibung

Die Erfindung betrifft ein Verfahren zur Durchführung einer Internet-Protokoll-basierten Kommunikation. Derartige Kommunikationen, die mittels eines Internet-Protokolls und somit eines vereinbarten Standards durchgeführt werden, sind im Stand der Technik allgemein bekannt.

Üblicherweise bedarf es zur Durchführung einer solchen Internet-Protokoll-basierten Kommunikation des Besitzes eines entsprechenden Kommunikationsgerätes, welches fähig ist, eine Kommunikation gemäß einem solchen Internet-Protokoll durchzuführen und welches gleichsam auch an das Internet angeschlossen ist. Bekannt sind hierfür z.B. Computer, die über einen entsprechenden Anschluss mit dem Internet verbunden sind und mittels einer Software, die auch als Browser bezeichnet wird, Kommunikationen im Internet durchführen können, insbesondere den Aufruf von Inhalten bestimmter Webseiten sowie auch die Durchführung von Kommunikationen, wie beispielsweise sogenannter E-Mails oder in jüngerer Zeit auch die Durchführung von Telefonie gemäß dem Standard VoIP (Voice over IP).

Wesentlich ist es dabei zur Durchführung einer solchen Internet-Protokoll-basierten Kommunikation, dass das verwendete Kommunikationsgerät eine Internet-Kennung, insbesondere die sogenannte IP-Adresse aufweist, mit der das Kommunikationsgerät zum einen Daten in das Internet absenden kann und zum anderen Daten aus dem Internet empfangen kann. Derartige IP-Adressen können zum einen statisch dem Gerät zugewiesen sein oder aber auch dynamisch und somit zeitweise vergeben sein.

Wesentlich ist es hierbei, dass ohne die Zuordnung einer derartigen Internet-Netzkennung eine Teilnahme an der Kommunikation im Internet nach den heutigen Verfahren nicht möglich ist und somit sämtliche bekannten Kommunikationsgeräte von der Teilnahme an einer Kommunikation im Internet aufgrund eines Internet-Protokolls ausgeschlossen sind, sofern diese nicht eine entsprechende Internet-Netzkennung aufweisen.

Insbesondere Kommunikationsgeräte, die üblicherweise vorgesehen sind, um außerhalb des Internet eine Kommunikation durchzuführen, wie beispielsweise standardmäßige Festnetztelefone, die zur Kommunikation über das Telefonfestnetz vorgesehen sind sowie auch Mobiltelefone, die zu einer Kommunikation über ein Mobiltelefonnetz vorgesehen sind, können somit nicht ohne Weiteres für eine Kommunikation im Internet Verwendung finden.

Zwar ist es mittlerweile bekannt, dass auch Mobiltelefone geeignet sein können, um Internetinhalte aufzurufen, hierbei handelt es sich jedoch sodann um entsprechend eingerichtete Mobiltelefone mit der Eignung, eine Software zur Darstellung einer Webbrowseroberfläche ablaufen zu lassen, um derartige Internetinhalte verfügbar zu machen, dies jedoch auch nur eingeschränkt.

Insbesondere zur Durchführung einer Sprachkommunikation über das Internet sind selbst derartige Mobiltelefone nicht geeignet und es bedarf darüber hinaus unabhängig von der Art und Weise der Kommunikation immer des bewussten Eingreifens des Nutzers dieses Kommunikationsgerätes, um mit einem solchen Kommunikationsgerät eine Kommunikation im bzw. mit dem Internet durchzuführen.

Aufgabe der Erfindung ist es, ein Verfahren bereitzustellen, mit dem die Möglichkeit geschaffen wird, eine Internet-Protokoll-basierte Kommunikation mit grundsätzlich jeglichem Kommunikationsgerät zu ermöglichen, selbst wenn dieses nicht ausdrücklich eingerichtet ist, um an einer Internet-Protokoll-basierten Kommunikation teilzunehmen. Insbesondere soll so eine Kommunikationsmöglichkeit geschaffen werden für Festnetztelefone sowie Mobiltelefone und hier insbesondere zur Durchführung einer Sprachkommunikation über das Internet unter Zuhilfenahme dieser klassischen üblicherweise nur in Kommunikationsnetzen außerhalb des Internets funktionierender Geräte.

Darüber hinaus soll bevorzugt mit dem erfindungsgemäßen Verfahren sichergestellt werden, dass die Durchführung der Internet-Protokoll-basierten Kommunikation nicht erst ausdrücklich durch einen Kommunikationsteilnehmer initiiert werden muss, sondern dass eine derartige Kommunikation automatisch ausgewählt wird, sofern eine solche Kommunikationsmöglichkeit zur Verfügung steht.

Ebenso ist es bevorzugt Aufgabe der Erfindung, automatisch eine internet-basierte Kommunikation an einen Nutzer eines Kommunikationsgeräts stattfinden zu lassen ohne dass der Nutzer hierfür mit seinem Gerät tätig wird, z.B. zu Werbe- oder Informationszwecken.

Gelöst wird diese Aufgabe erfindungsgemäß dadurch, dass der Kennung eines Kommunikationsgerätes, die dieses Kommunikationsgerät außerhalb des Internet aufweist, also in seinem üblichen genutzten Netz, eine Internet-Netzkennung, insbesondere eine IP-Adresse automatisch insbesondere virtuell zugeordnet wird und eine Kommunikation von Inhalten zumindest virtuell vom oder zum Nutzer des Kommunikationsgerätes von der zugeordneten oder an die zugeordnete Netzkennung erfolgt.

Wesentlicher Kerngedanke der Erfindung ist es, dass es bei dem erfindungsgemäßen Verfahren zu einer Kommunikation kommt, die zumindest virtuell, ggfs. auch konkret mit der zugeordneten bzw. von der zugeordneten Netzkennung erfolgt. Insbesondere bei der Verwendung von Festnetz- oder Mobiltelefonen werden demnach Inhalte mittels der Internet-Protokoll-basierten Kommunikation nicht mehr an die Netzkennung des Telekommunikationsgerätes außerhalb des Internets, also beispielsweise die Rufnummer, CLI (Call Line Identity), bzw. das HLR (Home Location Register) übermittelt, sondern zumindest virtuell an bzw. von der Netzkennung, wobei sodann erfindungsgemäß lediglich eine Datenwandlung vorgesehen ist, um bezogen auf das konkret eingesetzte Kommunikationsgerät die Kommunikation über dieses , d.h. von und zu diesem zu ermöglichen, wohingegen die eigentliche Kommunikation gemäß dem gewählten Internet-Protokoll, also beispielsweise gemäß des TCP/IP-Standards oder auch des VoIP-Standards durchgeführt werden kann, oder zumindest die zu transportierenden Daten, z.B. Sprach-Daten, die zwischen zwei Kommunikationsgeräten Kommuniziert werden sollen, als internet-protokoll-konforme Daten transportiert werden.

Dabei kann grundsätzlich der Transport der Daten dann sowohl über das Internet, als auch über das üblicherweise genutzte Netzwerk des Kommunikationsgerätes, also z.B. das Telefon-Festnetz oder das Telefon-Mobilfunknetz erfolgen.

So ergibt sich gerade auch durch die automatische Zuordnung einer Internet-Netzkennung, wie z.B. einer IP-Adresse an eine Netzkennung des Kommunikationsgerätes, wie z.B. an eine CLI (Call Line Identity) eines Festnetzgerätes) oder auch an ein HLR (Home Location Register) eines Mobiltelefons oder auch an jegliche andere mögliche Kennung eines Kommunikationsgerätes (z.B. Gerätekennung), dass ein Nutzer eines solchen Kommunikationsgerätes bei Durchführung des Verfahrens automatisch und uneingeschränkt an einer Internet-Protokoll-basierten Kommunikation teilnehmen kann, insbesondere obwohl das genutzte Gerät keine originäre Internet-Fähigkeit aufweist. Dabei wird unter der Internet-Fähigkeit verstanden, dass ein Gerät geeignet ist, ohne externe Datentransformation am Informationsaustausch im Internet mittels selbst generierter Internet-Protokoll-konformer Daten teilzunehmen.

Es bedarf somit nicht mehr des Erwerbs eines bestimmten, hierfür geeigneten Kommunikationsgerätes, sondern auch zurückliegende Gerätegenerationen können uneingeschränkt für derartige moderne Kommunikationsmöglichkeiten eingesetzt werden, da verfahrensgemäß zumindest virtuell die Kommunikation gemäß dem Internetstandard, also eine gewählten Internet-Protokoll durchgeführt wird und lediglich für die Kommunikation mittels des Kommunikationsgerätes eine Datenwandlung vorzunehmen ist.

So kann es gemäß einer möglichen Ausgestaltung des Verfahrens in einer Alternative vorgesehen sein, dass die vom genutzten Kommunikationsgerät abgehenden Daten aus einem von dem Kommunikationsgerät oder dem von diesem genutzten Netzwerk typischen Datenformat netzintern in ein Internet-Protokoll-konformes Datenformat gewandelt und in das Internet versendet werden, also eine Wechsel im Transportmedium (Netzwerk) stattfindet bzgl. des genutzten Kommunikationsgerätes. Kumulativ oder alternativ können die aus dem Internet an das genutzte originär nicht internetfähige Kommunikationsgerät gesendeten Daten aus einem Internet-Protokoll-konformen Datenformat in ein vom Kommunikationsgerät oder dem von diesem genutzten Netzwerk typisches Datenformat netzintern gewandelt werden und an das Kommunikationsgerät gesendet werden. So kann durch diese Ausgestaltung die Kommunikation eines nicht originär internetfähigen Kommunikationsgerätes bidirektional über das Internet erfolgen, d.h. es kann so eine Kommunikation mit einem internet-fähigen Kommunikationsgerät stattfinden, was ohne diese Erfindung nicht möglich wäre. Hier kann der Datentransport über das Internet mit internet-protokoll-konformen Daten, insbesondere Datenpaketen nicht nur virtuell sondern tatsächlich konkret zwischen den Internet-Netzwerkkennungen erfolgen, von denen wenigstens eine, die des nicht originär internet-fähigen Kommunikationsgerätes einer üblichen Kennung dieses Gerätes erfindungsgemäß zugeordnet ist.

Gerade auch durch die hier beschriebene Möglichkeit der Datenwandlung innerhalb des Netzes, wobei es sich hierbei bevorzugt um dasjenige Netz bevorzugt handelt, in welchem das nicht internetfähige Kommunikationsgerät üblicherweise eingerichtet ist, um darin zu kommunizieren, also beispielsweise das Festnetz oder auch das Mobilfunknetz, wird gewährleistet, dass das eingesetzte Kommunikationsgerät selbst keine Infrastruktur mitbringen muss, um an einer Internet-Protokoll-basierten Kommunikation teilzunehmen.

Vielmehr wird diese Infrastruktur innerhalb des genutzten Netzes zur Verfügung gestellt, so dass sich auch hier durch die Nutzbarkeit jeglicher üblicher am Markt erhältlicher Kommunikationsgeräte erschließt. Allgemein gilt hier, dass unter dem Begriff des genutzten Netzes dasjenige Netz verstanden wird, welches normal von einem nicht internetfähigen Kommunikationsgerät genutzt wird.

In einer anderen Ausgestaltung des Verfahren kann es auch vorgesehen sein, dass die internet-protokoll-basierte Kommunikation ausserhalb des Internet stattfindet, also über das im obigen Sinne genutzte Netz, jedoch mittels internetprotokoll-konformen Daten oder Datenpaketen.

So kann es vorgesehen sein, dass bei der Durchführung einer Kommunikation zwischen zwei Kommunikationsgeräten, von denen eines internetfähig und das andere nicht internetfähig ist, die vom genutzten nicht internet-fähigen Kommunikationsgerät abgehenden Daten aus einem von diesem Kommunikationsgerät oder dem von diesem genutzten Netzwerk typischen Datenformat netzintern in ein Internet-Protokoll-konformes Datenformat gewandelt werden, diese gewandelten Daten in einen für das genutzte Netzwerk vorgesehenen Kommunikationsdatensatz integriert und mit diesem über das genutzte Netzwerk versendet werden, wobei das empfangende Vermittlungssystem die Internet-Protokoll-Daten aus dem Kommunikationsdatensatz extrahiert und an das internetfähige Kommunikationsgerät übermittelt.

In der anderen Kommunikationsrichtung kann es weiterhin vorgesehen sein, dass bei der Durchführung einer Kommunikation zwischen zwei Kommunikationsgeräten, von denen eines internetfähig und das andere nicht internetfähig ist, die vom genutzten internet-fähigen Kommunikationsgerät abgehenden Daten in einen für das genutzte Netzwerk vorgesehenen Kommunikationsdatensatz integriert und mit diesem über das genutzte Netzwerk versendet werden, wobei das empfangende Vermittlungssystem die Internet-Protokoll-Daten aus dem Kommunikationsdatensatz extrahiert und in ein von dem Kommunikationsgerät oder dem von diesem genutzten Netzwerk typisches Datenformat wandelt und diese gewandelten Daten an das nicht internetfähige Kommunikationsgerät übermittelt.

Bei dieser Ausführung findet somit der Datentransport innerhalb des genutzten Netzes statt, allerdings ebenso in Form von internet-protokoll-konformen Daten, die hier in Datensätze integriert werden, die im genutzten Netz Verwendung finden. Das genutzte Netz dient somit als Trägersystem für Internet-Protokoll-konforme Daten, obwohl es originär dafür weder vorgesehen noch geeignet ist.

Bei dieser Ausführung findet der Transport bevorzugt nur virtuell zwischen zwei Internet-Netzwerkkennungen statt, von denen eine der üblichen Netzwerkkennung des Kommunikationsgeräts im genutzten Netz erfindungsgemäß zugeordnet ist.

Hierbei kann es in einer bevorzugten Ausgestaltung aller Ausgestaltungen des Verfahrens vorgesehen sein, dass die Datenwandlung der oben beschriebenen Arten innerhalb eines netzinternen Vermittlungssystems, also eines Vermittlungssystems des genutzten Netzes erfolgt, die zumindest in der erstgenannten Ausführung an das Internet angeschlossen sein kann..

Hierbei kann es sich insbesondere um ein, dem jeweiligen Kommunikationsgerät nächstliegendes Vermittlungssystem, insbesondere eine Vermittlungsstelle handeln, also z.B. die Vermittlungsstelle der sogenannten letzten Meile. So besteht hier dementsprechend verfahrensgemäß die Möglichkeit, eine Schnittstelle von dem genutzten Kommunikationsgerät zum Internet über die Vermittlungsstelle oder zumindest zur Erzeugung von internet-protokoll-basierten Daten und Weitertransport über das genutzte Netz einzurichten, die insbesondere nächstliegend dem jeweiligen genutzten Kommunikationsgerät zugeordnet ist.

In der ersten Ausführung erfolgt lediglich bei der Kommunikation zwischen dem Kommunikationsgerät und dieser Vermittlungsstelle die Kommunikation nach dem Netzstandard des für das Kommunikationsgerät eigentlich vorgesehenen Netzes, wohingegen ab der Vermittlungsstelle die Kommunikation über das Internet erfolgt gemäß dem Internet-Protokoll-basierten Kommunikationsstandard, wie beispielsweise TCPIP oder VoIP. In der zweiten Ausführung verbleibt die Kommunikation vollständig innerhalb des normalen genutzten Netzes, allerdings mittels Internet-protokoll-konformen Daten, die in Kommunikationsdatensätze des genutzten Netzes eingebunden werden.

So können beispielsweise Sprachdatenpakete mittels eines normalen Mobiltelefons über den üblicherweise paketbasierten Versand über ein GSM- oder UMTS-Netz versendet werden, beispielsweise nach dem GPRS-Standard, wohingegen dann in der Vermittlungsstelle, welche diese Pakete empfängt, eine Wandlung in ein Internet-Protokoll stattfinden kann. Die eigentliche Kommunikation der gewandelten Daten erfolgt sodann von bzw. zu der IP-Adresse, die dem genutzten Kommunikationsgerät zumindest zeitweise zugeordnet ist und zwar entweder unter Verlassen des bislang genutzten Netzes unter Nutzung der gewandelten Daten direkt als Kommunikationsdaten oder unter Beibehalten des genutzten Netzes und Einbindung der gewandelten Daten in für dieses genutzte Netz typische Kommunikationsdatensätze zum Zweck des Transports zu dem nächsten rückwandelnden Vermittlungssystem.

In einer besonders bevorzugten Ausgestaltung des Verfahrens kann es demnach vorgesehen sein, dass die Zuordnung einer Internet-Netzwerkkennung, wie beispielsweise einer IP-Adresse automatisch netzintern erfolgt, sobald durch das Kommunikationsgerät ein Rufaufbau gestartet wird oder an das Kommunikationsgerät ein Anruf erfolgt. Hierfür kann z.B. netzintern im Netz des den Ruf aufbauenden Kommunikationsgerät geprüft werden, on eines der beiden in der Kommunikation zu verwendenden Kommunikationsgerät internetfähig ist. Ist dies der Fall, so kann ggfs. automatisch das erfindungsgemäße Verfahren zum Einsatz kommen.

So kann demnach die Zuordnung für den Benutzer eines solchen Kommunikationsgerätes bei der Durchführung des Verfahrens verdeckt erfolgen, d.h. ohne dass der Nutzer hiervon Kenntnis erhält oder aber zumindest ohne dass der Nutzer dies ausdrücklich initiieren muss.

So kann es beispielsweise vorgesehen sein, dass eine Internet-Protokoll-basierte Kommunikation immer dann automatisch ausgewählt wird durch Zuordnung einer Internet-Netzwerkkennung an die üblicherweise vorhandene Netzwerkadresse des genutzten Kommunikationsgerätes, wenn die gerade genutzte Vermittlungsstelle, über welche ein Rufaufbau oder auch ein Anruf an das Kommunikationsgerät erfolgt, eingerichtet ist, um an dem erfindungsgemäßen Verfahren teilzunehmen und z.B. eine Schnittstelle zum Internet aufweist oder zumindest die nötige Datenwandlung vornehmen kann. Dies ist heutzutage in vielen Fällen der Fall, so dass hierdurch auch eine Netzentlastung des üblicherweise mittels eines solchen Kommunikationsgerätes genutzten Netzes, wie beispielsweise des Mobilfunknetzes, erfolgen kann.

Wie eingangs erwähnt, kann es hierbei vorgesehen sein, dass eine Datenwandlung bidirektional erfolgt. Dies erschließt die Möglichkeit, dass sowohl durch ein Kommunikationsgerät Anrufe gestartet werden können, die sodann über das Internet oder zumindest als Internet-Protokoll-konforme Daten abgewickelt werden als auch umgekehrt, dass Kommunikationsgeräte mittels anderer Kommunikationsgeräte angerufen werden, wobei auch dann die Kommunikation Internet-Protokoll-basiert stattfindet und die Wandlung der Daten sodann lediglich wiederum im Vermittlungssystem, insbesondere der nächstliegenden Vermittlungsstelle, stattfindet.

Das erfindungsgemäße Verfahren hat somit den besonderen Vorteil, dass es eingesetzt werden kann, um z.B. Sprachtelefonie mittels nicht VoIP-fähigen Kommunikationsgeräten über das Internet oder in der zweiten Ausführung auch über das normal genutzte Netz durchzuführen. Hierbei kann es sich beispielsweise wie eingangs erwähnt um Festnetztelefone oder aber auch Mobilfunktelefone handeln, bei denen die entsprechenden Daten Internet-Protokoll-konform gewandelt werden und sodann z.B. über das Internet oder über das normal genutzte Netz allerdings als internet-protokoll-konforme Daten versendet werden an eine entsprechende Endstelle, die in der ersten Ausführung entweder direkt das Internet-Protokoll unterstützt oder aber nach dem gleichen erfindungsgemäßen Verfahren genutzt wird, d.h. dass hier ebenso in einem diesem Endgerät zugeordneten Vermittlungssystem die entsprechende Datenwandlung erfolgt.

Bei einer derart hergestellten Kommunikation zwischen zwei Teilnehmern, die beispielsweise klassische Kommunikationsgeräte verwenden, die nicht ursprünglich zur Durchführung einer Internet-Protokoll-basierten Kommunikation vorgesehen sind, besteht darüber hinaus auch ohne Weiteres die Möglichkeit, weitere Teilnehmer in eine bestehende Kommunikation zwischen diesen zwei Teilnehmern zu integrieren und somit beispielsweise Konferenzen auf einfache Art und Weise aufzubauen.

Gerade auch die Zuordnung der Kommunikationskosten zu einem der Teilnehmer bei zwei oder auch mehreren Teilnehmern einer Kommunikation kann grundsätzlich beliebig, z.B. zu einem Teilnehmer oder anteilig zu mehreren Teilnehmern einer durchgeführten Kommunikation erfolgen.

Ein weiterer großer Vorteil des erfindungsgemäßen Verfahrens ist es, dass es auch vorgesehen sein kann, netzintern, z.B. im Internet einen Filter, z.B. einen sogenannten Spam-Filter vorzusehen, in welchem Internetadressen gespeichert sind, die dafür bekannt sind, Werbung oder sonstige lästige Kommunikationen zu versenden. So kann verhindert werden, dass die Kommunikationsgeräte, die zur Durchführung des erfindungsgemäßen Verfahrens genutzt werden, durch derartige Spam-Versender belästigt werden, da eine Kommunikation zu diesen Kommunikationsgeräten erfindungsgemäß über einen solchen Filter erfolgen kann, was bei einer klassischen Kommunikation dieser Telekommunikationsgeräte, wie beispielsweise über das Festnetz nach dem analogen oder ISDN-Standard oder aber auch über das Mobilfunknetz nicht möglich ist. Die Nutzung des Internets als Teil der Kommunikation nach einer automatischen Zuweisung einer Internet-Netzkennung erschließt somit weitere Filtermöglichkeiten.

Insbesondere besteht bei dieser Alternative des erfindungsgemäßen Verfahrens auch die Möglichkeit, in eine bestehende Kommunikation weitere Informationen einzuspielen. Beispielsweise kann es sich um Werbeinformationen, insbesondere auch um personalisierte Werbeinformationen handeln, insbesondere wobei hier eine Personalisierung dieser Werbeinformationen in Abhängigkeit der genutzten Netzkennung eines der genutzten Kommunikationsgeräte erfolgen kann. So nutzt wie eingangs genannt jedes Kommunikationsgerät zur Teilnahme an einer Kommunikation eine Netzwerkkennung, wie beispielsweise die CLI oder das HLR, je nachdem, welche Art von Netzgerät betrachtet wird, so dass in Abhängigkeit einer solchen, dem Kommunikationsgerät zugeordneten Netzwerkkennung auch die nutzende Person identifiziert werden kann und somit die Möglichkeit besteht, Werbeinformationen zu personalisieren, nachdem eine solche Identifikation stattgefunden hat. Dementsprechend können ausgewählte Werbeinformationen, die für die nutzende Person potentiell interessant sind, in eine bestehende Kommunikation eingebunden werden.

In einer anderen Alternative des erfindungsgemäßen Verfahrens kann es auch vorgesehen sein, dass eine Zuordnung einer Internet-Netzkennung, zu einer Kennung eines Kommunikationsgerätes, die dieses außerhalb des Internet aufweist, dann stattfindet, wenn ein solches Kommunikationsgerät in der Umgebung eines internetfähigen Kommunikationsgerätes detektiert wird.

Gemäß einer erfindungsgemäßen Ausgestaltung kann es dabei vorgesehen sein, dass es sich bei einem solchen internetfähigen Kommunikationsgerät um eine Bildschirmanzeige, beispielsweise eine Werbetafel handelt, die mit Werbeinhalten aus dem Internet versorgt werden kann.

Hierbei kann es demnach vorgesehen sein, dass dem Kommunikationsgerät eine IP-Adresse zugeordnet wird, die das internetfähige Kommunikationsgerät z.B. fest aufweist, wobei hierbei unter der Zuordnung erfindungsgemäß verstanden wird, dass sich so die Möglichkeit erschließt, an das genannte internetfähige Kommunikationsgerät Informationen und/oder Inhalte zur Kommunikation, insbesondere Anzeige an den Nutzer des detektierten Kommunikationsgerätes zu übermitteln. Es besteht somit also die Möglichkeit, zu detektieren, dass sich beispielsweise ein Nutzer mit Mobiltelefon in der Umgebung eines internetfähigen Kommunikationsgerätes befindet, so dass hierdurch festgestellt wird, dass die Wahrscheinlichkeit hoch ist, dass der Nutzer dieses mit sich getragenen Kommunikationsgerätes das internetfähige Kommunikationsgerät, wie z.B. die Bildschirmanzeige betrachten kann und somit an den Nutzer des detektierten Kommunikationsgerätes über dieses internetfähige Kommunikationsgerät, beispielsweise die genannte Werbetafel, eine Information oder einen Inhalt, insbesondere eine Werbung, kommuniziert werden kann.

So erfolgt in dem Sinne eine Zuordnung zwischen der IP-Adresse des internetfähigen Kommunikationsgerätes, die beispielsweise statisch oder auch dynamisch sein kann, an die Netzkennung des detektierten Kommunikationsgerätes, dass nämlich effektiv die durchgeführte Kommunikation an den Nutzer dieses detektierten Kommunikationsgerätes durchgeführt wird.

Beispielsweise kann es hierfür vorgesehen sein, dass eine Detektion erfolgt durch einen Vergleich des Ortes eines ortsfesten internetfähigen Kommunikationsgerätes mit einem festgestellten Ort des anderen Kommunikationsgerätes. Beispielsweise kann der Ort eines Mobiltelefons festgestellt werden anhand der aktuellen Funkzelle, in der sich das Mobiltelefon befindet. Wird hierbei festgestellt, dass in derselben oder gegebenenfalls auch in einer benachbarten Funkzelle ein internetfähiges Kommunikationsgerät, wie z.B. eine Werbetafel, beispielsweise an einer Bushaltestelle, Litfasssäule oder ähnlichem vorhanden ist, so kann veranlasst werden, dass verfahrensgemäß Inhalte zum Empfang an den Nutzer bzw. Besitzer des festgestellten Kommunikationsgerätes übersandt werden.

In einer anderen Ausführung kann es auch vorgesehen sein, dass die Detektion erfolgt durch Sensoren an einem internetfähigen Kommunikationsgerät. Beispielsweise können derartige Sensoren ansprechen auf die Signale, die Mobilfunktelefone aussenden, z.B. um sich regelmäßig in das Mobilfunknetz einzubuchen oder es können auch Sensoren vorgesehen sein, die andere Kommunikationsgeräte anhand deren Eignung zur Durchführung einer Nahfeldkommunikation, wie beispielsweise über Bluetooth oder RFID feststellen.

Das erfindungsgemäße Verfahren hat hierbei den besonderen Vorteil, dass die Art des kommunizierten Inhaltes, also beispielsweise die Art der Werbebotschaft, die an eine elektronische, internetfähige Werbetafel übersandt wird, in Abhängigkeit der Kennung des detektierten Kommunikationsgerätes durchgeführt werden kann.

So besteht die Möglichkeit, den Inhalt zu personalisieren, beispielsweise dadurch, dass anhand der festgestellten Kennung des Mobiltelefons Rückschlüsse gezogen werden auf den Nutzer des Mobiltelefons, wobei es sodann vorgesehen sein kann, dass über diesen Nutzer Informationen in einer netzinternen Datenbank zur Verfügung stehen. Es besteht so die Möglichkeit, aus einer netzinternen Datenbank diejenigen Informationen oder Werbeinhalte oder sonstige Inhalte herauszusuchen, die für die anhand des Kommunikationsgerätes und dessen Kennung identifizierte Person von Interesse sein könnten, so dass individuell angepasste Inhalte über das internetfähige Kommunikationsgerät, wie die eingangs genannte Werbetafel oder sonstige Anzeigen kommuniziert werden zum Empfang für den genannten Nutzer.

In einer weiteren Ausgestaltung kann es hier auch vorgesehen sein, dass anhand wenigstens einer festgestellten Kennung wenigstens eines detektierten Kommunikationsgerätes Informationen über den oder die der wenigstens einen Kennung zugeordneten Nutzer ermittelt werden und in Abhängigkeit hiervon, insbesondere in Abhängigkeit von Gemeinsamkeiten mehrerer Nutzer von mehreren Kommunikationsgeräten der Inhalt zur Übermittlung eines internetfähigen Kommunikationsgerätes ausgewählt wird.

Beispielsweise kann hierfür ein Content-Management-System genutzt werden, wobei es hier sodann wie eingangs genannt vorgesehen sein kann, zunächst anhand der festgestellten Kennungen die Nutzer der Kommunikationsgeräte zu ermitteln bzw. zuzuordnen und so anhand der Kennungen Daten aus einer netzinternen Datenbank betreffend diese Nutzer zu ermitteln. Da üblicherweise nicht nur eine Person sich in der örtlichen Umgebung einer derartigen internetfähigen Kommunikationsanlage, wie z.B. einer Werbetafel befindet, kann es sodann erfindungsgemäß vorgesehen sein, aus den gesammelten Informationen der mehreren gleichzeitig vorhandenen Nutzer Gemeinsamkeiten zu ermitteln, wie z.B. gemeinsame Interessensschwerpunkte, beispielsweise Gemeinsamkeiten bezüglich der Mobiltelefone, der genutzten Mobiltelefonprovider oder sonstiger personalisierter Informationen aufgrund derer auf Gemeinsamkeiten zwischen den detektierten Personen zurückgeschlossen werden kann. Es kann sodann ein Inhalt an die internetfähige Kommunikationseinheit ausgesandt werden, welche eine Gemeinsamkeit mit einer Vielzahl der detektierten Personen aufweist. Z.B. können Werbeinhalte über Mobiltelefone, Mobiltelefonprovider, technische Angebote oder sonstige personalisierte Werbebotschaften mit Gemeinsamkeiten für mehrere Nutzer an das Kommunikationsgerät, wie z.B. die Werbetafel übermittelt werden.

Ausführungsbeispiele der Erfindung sind in den nachfolgenden Figuren dargestellt. Es zeigen:
- Figur 1: die Möglichkeit einer Internet-Protokoll-basierten VoIP-Sprachtelefonie mittels handelsüblicher Mobiltelefone über das Internet
- Figur 2: die Möglichkeit einer Internet-Protokoll-basierten VoIP-Sprachtelefonie mittels handelsüblicher Mobiltelefone über das Festnetz
- Figur 2a:: die Zuordnungseinheit eines Vermittlungssystems
- Figur 3: die Kommunikation einer Werbebotschaft an eine Vielzahl von Nutzern in der Umgebung einer internetfähigen Werbeanzeige

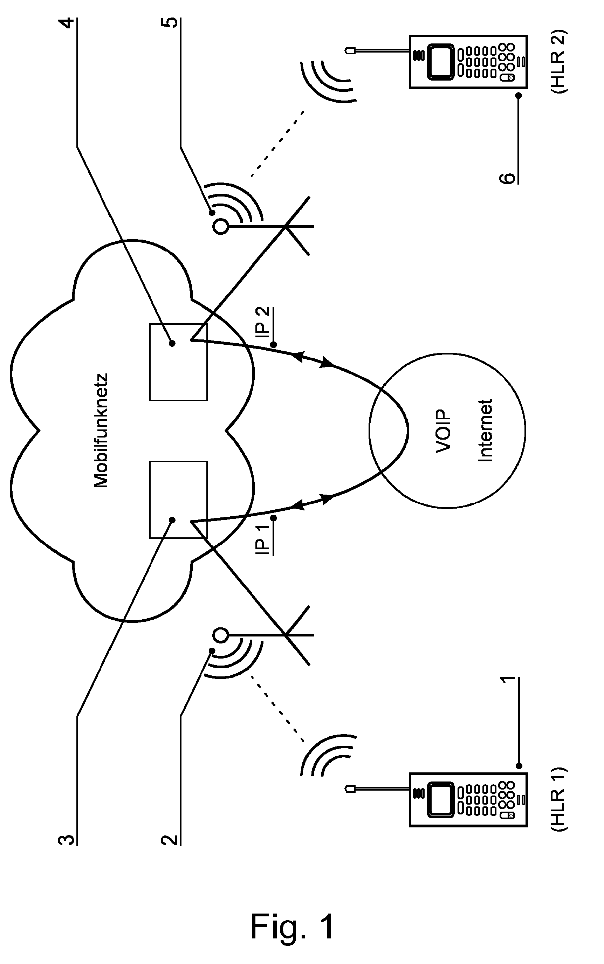

Die Figur 1 zeigt die erste Alternative der erfindungsgemäßen Ausführung, bei der es verfahrensgemäß vorgesehen ist, von einem Mobiltelefon 1, welches eine entsprechende Kommunikationskennung HLR 1 (Home Location Register) aufweist, zu einem zweiten Mobiltelefon 6 mit einer zweiten Mobilfunkkennung HLR 2 durchzuführen. In üblicher Weise erfolgt hier die Kommunikation zum nächstliegenden Empfangsmast 2 der betreffenden Funkzelle des Kommunikationsgerätes 1 mittels des üblichen Kommunikationsstandards, der im Mobilfunknetz vorgesehen ist.

Die Vermittlungsstelle 3, die dem nächstliegenden Mobilfunkmast 2 der Funkzelle zugeordnet ist, übernimmt hier verfahrensgemäß die netzinterne Zuordnung einer IP-Adresse IP1 zu der Kennung HLR 1 des Kommunikationsgerätes 1, so dass sodann von der Vermittlungsstelle 3 innerhalb des Mobilfunknetzes nicht wie in klassischer Weise üblich eine Kommunikation mobilfunknetzintern zur Vermittlungsstelle 4 erfolgt, sondern demgegenüber erfindungsgemäß von der nun zugeordneten IP-Adresse 1 eine Internet-Protokoll-basierte Kommunikation über das Internet, beispielsweise gemäß dem VoIP-Standard an das Kommunikationsgerät 6 erfolgt, welchem ebenso in der zugeordneten Vermittlungsstelle 4 eine IP-Adresse IP 2 zugeordnet ist, hier also die Zuordnung zu der Kennung HLR 2 des Mobilfunkgerätes 6 erfolgt. Zur Speicherung der Zuordnung zwischen einer Netzwerkkennung des genutzten Kommunikationsgerätes ausserhalb des Internet und einer Internet-Netzkennung kann bei allen im Rahmen dieser Erfindungsbeschreibung genannten Ausführungen eine Datenbank vorgesehen sein, die z.B. einem Vermittlungssystem bzw. einer Vermittlungsstelle zugeordnet sein kann.

So findet demnach die Kommunikation Internet-Protokoll-basiert, beispielsweise nach dem VoIP-Standard zwischen den beiden Vermittlungsstellen 3 und 4 anhand der zugeordneten IP-Adressen IP 1 und IP 2 statt. Lediglich die Kommunikation von den Vermittlungsstellen, die den Sendemasten 2 und 5 bei dieser Kommunikation zugeordnet ist, zu den Kommunikationsgeräten 1 und 6 erfolgt nach dem üblichen Mobilfunkstandard, beispielsweise innerhalb eines GMS- oder UMTS-Netzes, insbesondere somit paketbasiert. Es besteht daher hier erfindungsgemäß die Möglichkeit, eine deutlich günstigere Internet-Protokoll-basierte Sprachtelefonie über das Internet nach dem VoIP-Standard durchzuführen im Vergleich zu der üblichen Mobilfunktelefonie über das Mobilfunknetz.

Durch die erfindungsgemäß automatisch vorgenommene Zuordnung der IP-Adressen zu dem am Verfahren teilnehmenden Mobiltelefon kann sichergestellt werden, dass die über das Internet versandte Kommunikationsinformationen seitens der Kommunikationsgeräte nahen Vermittlungsstellen an die jeweils anzusprechenden Kommunikationsgeräte richtig adressiert werden. Hierfür kann bei allen hier konkret oder im allgemeinen Teil der Beschreibung genannten Ausführungen ein Vermittlungssystem Zugriff nehmen auf eine zuvor genannte, dem jeweiligen Vermittlungssystem zugeordnete Datenbank, um die Wandlung und Weiterleitung der Daten vorzunehmen.

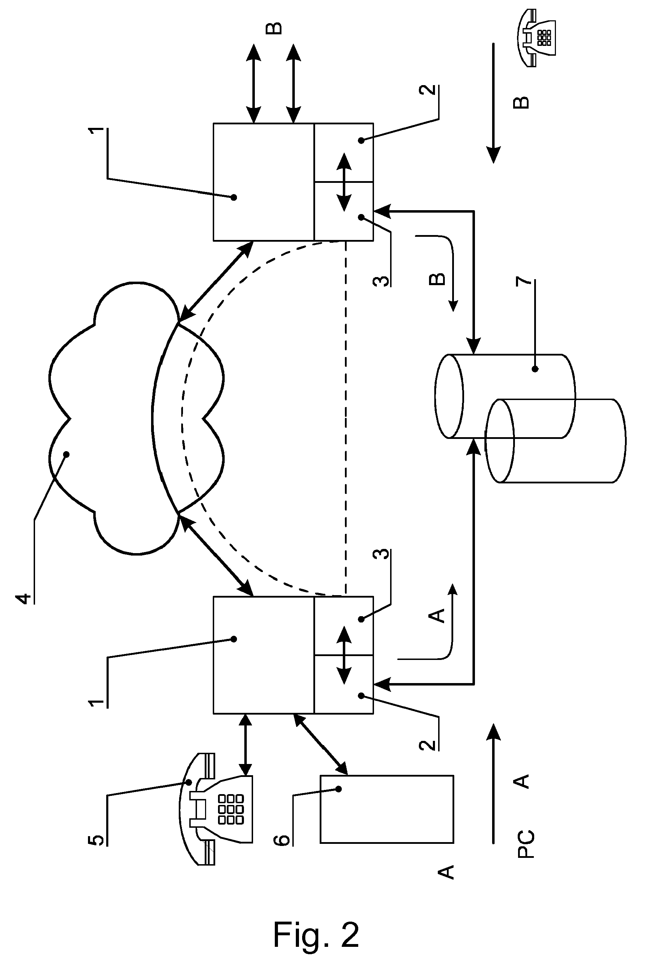

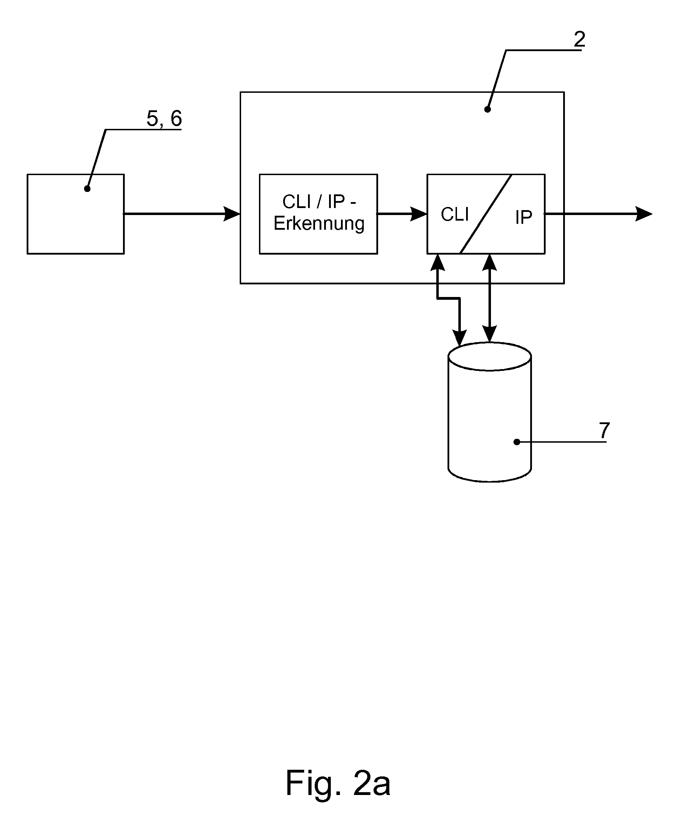

Figur 2 zeigt ein Beispiel der zweiten genannten Alternative, bei der die Kommunikation innerhalb des genutzten Netzes, hier des Telefon-Festnetzes verbleibt.

Hier wird zur Kommunikation ein nicht internetfähiges Festnetztelefon 5 genutzt. In dem Vermittlungssystem 1 erfolgt in einer Einheit 2 eine Zuordnung von der Festnetzkennung CLI des Telefons 5 zu einer IP-Adresse. Diese Zuordnung wird in der Datenbank 7 gespeichert. Es erfolgt weiterhin eine Wandlung der Daten in Internet-Protokoll-konforme Daten, die sodann in einen Kommunikationsdatensatz des normal genutzten Netzes 4 integriert und über dieses, d.h. das Festnetz 4 versendet werden an das Vermittlungssystem 1 (rechtsseitig in der Figur 2) des empfangenden Kommunikationsgerätes, Es erfolgt hier eine Extraktion der Internet-Daten aus dem Festnetz-Kommunikationsdatensatz und eine Weiterleitung der so erhaltenen Internet-protokoll-konformen Daten an ein internetfähiges Gerät. So kann hier eine Kommunikation eines nicht internet-fähigen Gerätes 5 mit einem internet-fähigen Gerät erfolgen über das normale eigentlich nicht internetfähige Festnetz.

Der Weg in der anderen Richtung erfolgt derart, dass das internetfähige Gerät des Teilnehmers B (rechts) internet-protokoll-konforme Daten zur Kommunikation bereitstellt und diese im rechtsseitigen Vermittlungssystem 1 integriert werden in einen Kommunikationsdatensatz des genutzten Festnetzes und über dieses transportiert werden zum linksseitigen Vermittlungssystem 1, dort extrahiert und gewandelt werden und dann an das Telefon 5 übermittelt werden.

Die Figur 2a zeigt exemplarisch die Zuordnungseinheit 2 eines Vermittlungssystems 1. Hier kann die Netzwerkkennung eines Kommunikationsgerätes erkannt werden, wonach eine Zuordnung einer IP-Adresse erfolgt, wobei diese Zuordnung in der Datenbank 7 für die weitere Nutzung gespeichert wird.

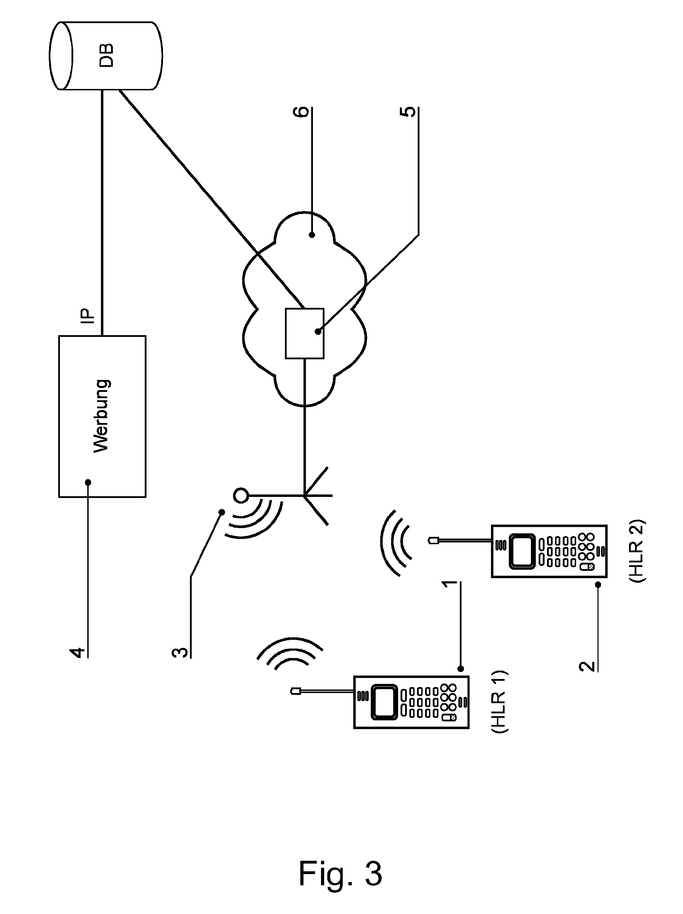

Die Figur 3 zeigt die alternative Ausgestaltung des Verfahrens, bei dem im Wesentlichen eine unidirektionale Inhaltskommunikation stattfindet. Im Beispiel ist es hier vorgesehen, dass sich in der örtlichen Umgebung einer aus dem Internet mit Daten versorgbaren Werbeanzeigetafel 4 beispielhaft zwei Mobiltelefone 1 und 2 befinden, die von ihren Nutzern umhergetragen werden. Beispielsweise kann eine solche Werbetafel an einer exponierten Stelle in einer Stadt in einer bestimmten Funkzelle angeordnet sein, in der sich ein Sende- und Empfangsmast 3 befindet.

Vermittels des Sende- und Empfangsmastes 3 kann somit verfahrensgemäß festgestellt werden, dass sich die beiden Mobiltelefone 1 und 2 innerhalb dieser Funkzelle befinden, in der gleichsam auch die Werbetafel 4 angeordnet ist. Es erfolgt dann eine automatisch erfindungsgemäß vorgesehene Zuordnung der IP-Adresse der Werbetafel innerhalb des Internet an die Kommunikationsadressen HLR 1 und HLR 2 der beiden Mobiltelefone 1 und 2, um nämlich so durch Kommunikation an die Internetadresse IP der Werbetafel 4 eine Kommunikation an die Nutzer der beiden Mobiltelefone 1 und 2 zu richten. Hierbei ist lediglich zur Verdeutlichung des Beispiels eine Beschränkung auf zwei Mobiltelefone vorgenommen, wobei selbstverständlich eine grundsätzlich beliebige Anzahl von Mobiltelefonen innerhalb der Funkzelle des Funkmastes 3 vorgesehen sein kann.

Verfahrensgemäß kann es so vorgesehen sein, anhand der Vermittlungsstelle 5 innerhalb des Mobilfunknetzes 6 in das Internet und hier insbesondere zu einer Datenbank DB eine Information zu übermitteln, welche Mobiltelefone und insoweit auch welche Nutzer dieser Mobiltelefone innerhalb der Funkzelle in der Nähe der Werbetafel 4 sich befinden. Anhand der Netzwerkkennungen HLR 1 und HLR 2 der beiden Mobiltelefone können die Nutzer, zumindest die vertraglichen Nutzer dieser Mobiltelefone ermittelt werden, so dass sodann auch die Möglichkeit besteht, aus der Datenbank DB entsprechende Informationen, wie z.B. Werbeinhalte herauszusuchen, die für diese festgestellten Nutzer der beiden Mobiltelefone 1 und 2 relevant insbesondere personalisiert sein können.

Dies kann beispielsweise anhand eines gespeicherten Nutzerprofils in Form bestimmter Profilmerkmale, wie z.B. Interessensschwerpunkte, Alter, Geschlecht, Beruf etc. gespeichert sein. Es kann sodann erfindungsgemäß vorgesehen sein, entweder für die beiden Nutzer getrennt Werbeinformationen an die Werbetafel 4 über das Internet zu übersenden und so an die Nutzer zur Wahrnehmung zu kommunizieren oder aber in einer alternativen Ausgestaltung des Verfahrens auch Gemeinsamkeiten zwischen den festgestellten Nutzern, hier im Beispiel den Nutzern der Mobiltelefone 1 und 2, innerhalb des Internet festzustellen und demnach aus der Datenbank DB Inhalte herauszusuchen, die eine Übereinstimmung anhand der festgestellten Gemeinsamkeiten der Nutzer aufweisen.

So kann gezielt eine Werbebotschaft generiert werden, die allgemein ohne Beschränkung auf die Anzahl der Nutzer die Interessen aller oder zumindest einer Vielzahl der festgestellten Nutzer innerhalb der betreffenden Funkzelle mit größter Wahrscheinlichkeit umfasst.

Die so ermittelten Informationen, die z.B. in einem Content-Management-System zur Verfügung stehen, können demnach zusammengefasst und als Werbebotschaft oder auch als sonstiger Inhalt an die Anzeigetafel 4 über das Internet unter der Adresse IP dieser Anzeigetafel 4 kommuniziert werden und erreichen so auch die angesprochenen Nutzer der Mobiltelefone. Hierdurch ergibt sich verfahrensgemäß die Zuordnung der IP-Adresse zu den Netzwerkkennungen HLR der festgestellten Mobiltelefone innerhalb des Funknetzes.

## Patentansprüche

1. Verfahren zur Durchführung einer Internet-Protokoll-basierten Kommunikation, **dadurch gekennzeichnet, dass** der Kennung eines Kommunikationsgerätes, die das Kommunikationsgerät ausserhalb des Internet aufweist, eine Internet-Netzkennung, insbesondere eine IP-Adresse automatisch zugeordnet wird und eine Kommunikation von Inhalten vom oder zum Nutzer des Kommunikationsgeräts virtuell von der zugeordneten oder an die zugeordnete Netzkennung erfolgt.

2. Verfahren nach Anspruch 1, **dadurch gekennzeichnet, dass** die vom genutzten Kommunikationsgerät abgehenden Daten aus **ei**nem von dem Kommunikationsgerät oder dem von diesem genutzten Netzwerk typischen Datenformat netzintern in ein Internet-Protokoll-konformes Datenformat gewandelt und in das Internet versendet werden und / oder die aus dem Internet an das genutzte Kommunikationsgerät gesendeten Daten aus einem Internet-Protokoll-konformen Datenformat in ein vom Kommunikationsgerät oder dem von diesem genutzten Netzwerk typisches Datenformat netzintern gewandelt werden und an das Kommunikationsgerät gesendet werden.

3. Verfahren nach Anspruch 1, **dadurch gekennzeichnet, dass** bei der Durchführung einer Kommunikation zwischen zwei Kommunikationsgeräten, von denen eines internetfähig und das andere nicht internetfähig ist, die vom genutzten nicht internetfähigen Kommunikationsgerät abgehenden Daten aus einem von dem Kommunikationsgerät oder dem von diesem genutzten Netzwerk typischen Datenformat netzintern in ein Internet-Protokoll-konformes Datenformat gewandelt werden, diese gewandelten Daten in einen für das genutzte Netzwerk vorgesehenen Kommunikationsdatensatz integriert und mit diesem über das genutzte Netzwerk versendet werden, wobei das empfangende Vermittlungssystem die Internet-Protokoll-Daten aus dem Kommunikationsdatensatz extrahiert und an das internetfähige Kommunikationsgerät übermittelt.

4. Verfahren nach Anspruch 1 oder 3, **dadurch gekennzeichnet, dass bei der Durchführung einer Kommunikation zwischen zwei** Kommunikationsgeräten, von denen eines internetfähig und das andere nicht internetfähig ist, die vom genutzten internet-fähigen Kommunikationsgerät abgehenden Daten in einen für das genutzte Netzwerk vorgesehenen Kommunikationsdatensatz integriert und mit diesem über das genutzte Netzwerk versendet werden, wobei das empfangende Vermittlungssystem die Internet-Protokoll-Daten aus dem Kommunikationsdatensatz extrahiert und in ein von dem Kommunikationsgerät oder dem von diesem genutzten Netzwerk typisches Datenformat wandelt und diese gewandelten Daten und an das nichtinternetfähige Kommunikationsgerät übermittelt.

5. Verfahren nach einem der vorherigen Ansprüche**, dadurch gekennzeichnet, dass** die Datenwandlung innerhalb eines netzinternen Vermittlungssystems erfolgt, insbesondere das an das Internet angeschlossen ist, insbesondere in einem dem Kommunikationsgerät nächstliegenden Vermittlungssystem.

6. Verfahren nach Anspruch 5, **dadurch gekennzeichnet, dass** das Vermittlungssystem zur Weiterleitung von kommunizierten Daten zwischen der tatsächlichen und der zugeordneten Internet-Netzkennung in beiden Richtungen auf eine Datenbank zugreift, in welcher die Zuordnung zwischen einer Netzwerkkennung ausserhalb des Internet und der Internet-Netzkennung gespeichert ist

7. Verfahren nach einem der vorherigen Ansprüche, **dadurch gekennzeichnet, dass** die Zuordnung einer Internet-Netzwerkkennung automatisch netzintern erfolgt, wenn durch das Kommunikationsgerät ein Rufaufbau gestartet wird oder an das Kommunikationsgerät ein Anruf erfolgt.

8. Verfahren nach einem der vorherigen Ansprüche, **dadurch gekennzeichnet, dass** es genutzt wird zur Sprachtelefonie mittels nicht-VoIP-fähigen Kommunikationsgeräten über das Internet.

9. Verfahren nach einem der vorherigen Ansprüche, **dadurch gekennzeichnet, dass** ein weiterer Teilnehmer in eine bestehende Kommunikation zwischen wenigstens zwei Teilnehmern integriert wird.

10. Verfahren nach einem der vorherigen Ansprüche, **dadurch gekennzeichnet, dass** die Zuordnung der Kommunikationskosten zu einem Teilnehmer oder anteilig zu mehreren Teilnehmern einer durchgeführten Kommunikation erfolgt.

11. Verfahren nach einem der vorherigen Ansprüche, **dadurch gekennzeichnet, dass** im für den Datentransport verwendeten Netzwerk, insbesondere im Internet ein Filter, insbesondere ein Spamfilter vorliegt, über welchen eine Kommunikation, insbesondere deren Einleitung erfolgt.

12. Verfahren nach einem der vorherigen Ansprüche, **dadurch gekennzeichnet, dass** in eine bestehende Kommunikation Informationen eingespielt werden, insbesondere personalisierte Werbeinformationen, insbesondere in Abhängigkeit der Netzkennung und/oder Gerätekennung eines angerufenen Kommunikationsgeräts.

13. Verfahren nach Anspruch 1, **dadurch gekennzeichnet, dass** eine Zuordnung stattfindet, wenn ein Kommunikationsgerät in der Umgebung eines internetfähigen Kommunikationsgerätes, insbesondere einer Bildschirmanzeige, detektiert wird, wobei eine IP-Adresse des internetfähigen Kommunikationsgerätes zugeordnet wird und wonach an das internetfähige Kommunikationsgerät ein Information und/oder Inhalte zur Kommunikation an den Nutzer des detektierten Kommunikationsgerätes übermittelt werden.

14. Verfahren nach Anspruch 10, **dadurch gekennzeichnet, dass** die Detektion erfolgt durch Vergleich des Ortes eines ortsfesten internetfähigen Kommunikationsgerätes und einem festgestellten Ort des anderen Kommunikationsgerätes.

15. Verfahren nach Anspruch 9, **dadurch gekennzeichnet, dass** die Detektion erfolgt durch Sensoren an einem internetfähigen Kommunikationsgerät.

16. Verfahren nach einem der vorherigen Ansprüche 10 bis 12, **dadurch gekennzeichnet, dass** die Art des Inhaltes ausgewählt wird in Abhängigkeit der Kennung des detektierten Kommunikationsgerätes.

17. Verfahren nach einem der vorherigen Ansprüche 10 bis 13, **dadurch gekennzeichnet, dass** anhand wenigstens einer festgestellten Kennung wenigstens eines detektierten Kommunikationsgeräts Information über den oder die der wenigstens einen Kennung zugeordneten Nutzer ermittelt werden und in Abhängigkeit hiervon, insbesondere in Abhängigkeit von Gemeinsamkeiten mehrerer Nutzer, der Inhalt zur Übermittlung an das internetfähige Kommunikationsgerät ausgewählt wird, insbesondere aus einem Content-Management-System und übermittelt wird.

18. System, umfassend ein Telekommunikationsnetzwerk mit einem Vermittlungssystem, **dadurch gekennzeichnet, dass** das Vermittlungssystem eingerichtet ist, der Kennung eines Kommunikationsgerätes, die das Kommunikationsgerät ausserhalb des Internet aufweist, eine Internet-Netzkennung, insbesondere eine IP-Adresse automatisch zuzuordnen, wobei mittels dieses Vermittlungssystems eine Kommunikation von Inhalten vom oder zum Nutzer des Kommunikationsgeräts virtuell von der zugeordneten oder an die zugeordnete Netzkennung erfolgt.
